# FASCICULE DE BREVET EUROPEEN

(11) **EP 1 366 958 B1**
(45) Date de publication et mention de la délivrance du brevet: **03.01.2007**
(21) Numéro de dépôt: 03291300.6
(22) Date de dépôt: 30.05.2003
(51) Int. Cl.: B60R 13/00

(54) **Pièce de style et véhicule automobile comportant une telle pièce de style**
Stilistisches Element und Kraftfahrzeug mit einem solchen stilistischen Element
Styling component and an automotive vehicle including such a styling component

(30) Priorité: 30.05.2002 FR 0206662
(43) Date de publication de la demande: 03.12.2003
(73) Titulaire: COMPAGNIE PLASTIC OMNIUM, 69007 Lyon (FR)
(72) Inventeur: Pommeret, Maelig, 69003 Lyon (FR); Andre, Gérald, 01500 Amberieu en Bugey (FR); Lacroix, Thibault, 01500 Chateau-Gaillard (FR)
(74) Mandataire: Remy, Vincent Noel Paul

(56) Documents cités:
- EP-A- 0 791 911
- WO-A-92/11622
- US-A- 5 249 104

## Description

La présente invention concerne une pièce de style de véhicule automobile et un véhicule automobile comportant une telle pièce.

Plus précisément, l'invention concerne une pièce de style comportant une peau extérieure disposée de façon visible sur un support du véhicule.

De telles pièces de style sont connues de l'état de la technique. Généralement, elles sont disposées sur le capot avant d'un véhicule automobile et comportent un logo distinctif de la marque du véhicule automobile. Pour que le logo soit visible, la pièce de style est, en général, chromée et se détache ainsi du fond sur lequel elle est disposée, c'est-à-dire le capot avant du véhicule automobile peint d'une autre couleur.

Cependant, en fonction de l'éclairage extérieur, et notamment la nuit, le logo n'est pas toujours très visible.

L'invention vise à remédier à cet inconvénient en fournissant une pièce de style de véhicule automobile dont la visibilité est améliorée.

L'invention a donc pour objet une pièce de style de véhicule automobile du type précité, caractérisée en ce que la peau extérieure comporte une surface extérieure semi-réfléchissante, c'est-à-dire qu'elle ne laisse passer la lumière que dans un seul sens.

Ainsi, si l'on dispose une source de lumière derrière la peau extérieure, la pièce de style est visible même la nuit, lorsque la source de lumière est allumée.

Une pièce de style selon l'invention peut, en outre, comporter l'une ou plusieurs des caractéristiques suivantes :
- la peau extérieure est composée d'une matière transparente et comporte une surface extérieure visible chromée ;
- la peau extérieure comporte une surface intérieure, opposée à la surface extérieure visible, et comportant un état de surface diffusant la lumière ;
- la pièce de style comporte un logo ; et
- la pièce de style comporte un monogramme.

L'invention concerne également un véhicule automobile comportant une pièce de style telle que décrite précédemment.

L'invention sera mieux comprise à l'aide de la description qui va suivre, donnée uniquement à titre d'exemple et faite en se référant aux dessins annexés, sur lesquels :
- la figure 1 représente un véhicule automobile comportant deux pièces de style selon l'invention ;
- la figure 2 représente partiellement l'une des pièces de style de la figure 1 en perspective et selon la coupe AA ; et
- la figure 3 représente schématiquement un détail de la pièce de style de la figure 2.

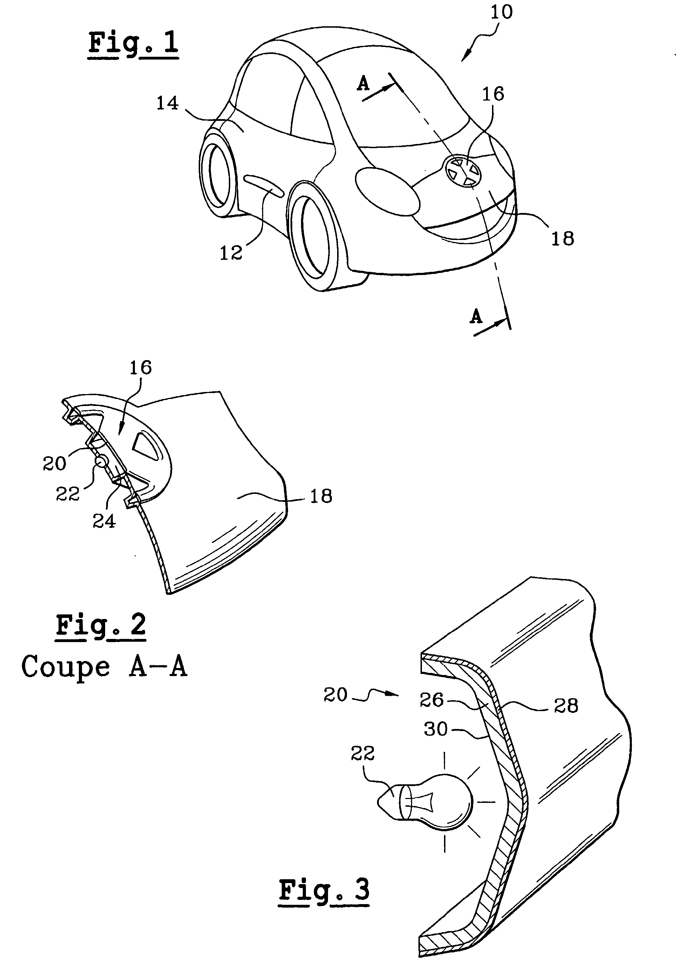

Le véhicule automobile 10 représenté à la figure 1 comporte une première pièce de style 12 disposée sur une portière 14 du véhicule.

De même, le véhicule 10 comporte une seconde pièce de style 16 disposée sur un plastron 18 qui forme partiellement le capot avant du véhicule automobile 10.

La première pièce de style 12 comporte, par exemple, un monogramme et la seconde pièce de style comporte un logo distinctif de la marque du véhicule automobile 10.

La figure 2 représente de façon plus précise la seconde pièce de style 16 disposée sur le plastron 18 en perspective et en coupe selon l'axe longitudinal AA du véhicule automobile 10.

On voit sur cette figure que la pièce de style 16 est fixée sur le plastron 18, mais se distingue de celui-ci par sa surface extérieure peinte d'une couleur différente de celle du plastron 18. De préférence, la surface extérieure de la pièce de style 16 est chromée.

La pièce de style 16 comporte une peau extérieure 20 derrière laquelle est disposée une source de lumière 22, par exemple fixée dans un boîtier 24 solidaire de la peau extérieure 20.

La figure 3 représente en détail la peau extérieure 20 de la pièce de style 16.

Celle-ci est constituée d'une matière transparente 26, par exemple du plastique rigide, dont la surface extérieure visible 28 est chromée et dont la surface intérieure 30, opposée à la surface extérieure, comporte un état de surface diffusant la lumière. Par exemple, elle peut être dépolie.

Ainsi, puisque la source de lumière 22 est située derrière la peau extérieure 20 de la pièce de style 16, c'est-à-dire en regard de la surface intérieure 30, lorsque cette source de lumière 22 est allumée, la lumière qu'elle émet est diffusée par la surface intérieure 30 dépolie, traverse la matière transparente 26, ainsi que la surface métallisée 28 visible de l'extérieur.

La pièce de style 16 est alors mise en valeur, par exemple la nuit, lorsque la source de lumière 22 est allumée, pour un observateur situé à l'extérieur du véhicule.

Par contre, lorsque la source de lumière 22 est éteinte, celle-ci est invisible de l'extérieur, en raison de l'existence de la surface chromée 28 qui est semi-réfléchissante (elle ne laisse passer la lumière que dans un seul sens).

Il apparaît clairement qu'une pièce de style selon l'invention améliore sa visibilité pour un observateur situé à l'extérieur du véhicule, notamment lorsqu'il fait nuit.

Comme il a été indiqué précédemment, la pièce de style peut comporter un logo, un monogramme, ou tout autre type de marquage.

## Revendications

1. Pièce de style (12, 16) de véhicule automobile (10) comportant une peau extérieure (20) disposée de façon visible sur un support (18) du véhicule, **caractérisée en ce que** la peau extérieure comporte une surface extérieure ne laissant passer la lumière que dans un seul sens.

2. Pièce de style (12, 16) selon la revendication 1, **caractérisée en ce que** la peau extérieure (20) est composée d'une matière transparente et comporte une surface extérieure (28) visible chromée.

3. Pièce de style (12, 16) selon la revendication 1 ou 2, **caractérisée en ce que** la peau extérieure (20) comporte une surface intérieure (30), opposée à la surface extérieure et comportant un état de surface diffusant la lumière.

4. Utilisation d'une pièce de style (12, 16) selon l'une quelconque des revendications 1 à 3 en tant que logo.

5. Utilisation d'une pièce de style (12, 16) selon l'une quelconque des revendications 1 à 3 en tant que monogramme.

6. Véhicule automobile (10) comportant une pièce de style (12, 16) selon l'une quelconque des revendications 1 à 5.

## Claims

1. A piece of styling (12, 16) for a motor vehicle (10), the piece of styling having an outside skin (20) that is disposed in visible manner on a support (18) of the vehicle, **characterized in that** said outside skin has an outside surface that allows light to pass in one direction only.

2. A piece of styling (12, 16) according to claim 1, **characterized in that** the outside skin (20) is made of a transparent material and has a visible outside surface (28) that is chromium-plated.

3. A piece of styling (12, 16) according to claim 1 or 2, **characterized in that** the outside skin (20) has an inside surface (30) opposite from its outside surface and having a surface state that diffuses light.

4. The use of a piece of styling (12, 16) according to anyone of claims 1 to 3, as a logo.

5. The use of a piece of styling (12, 16) according to anyone of claims 1 to 3, as a monogram.

6. A motor vehicle (10) having a piece of styling (12, 16) according to anyone of claims 1 to 5.

## Patentansprüche

1. Dekorteil (12, 16) eines Kraftfahrzeuges (10), das eine äußere Abdeckung (20) aufweist, die auf sichtbare Weise auf einer Haltefläche (18) des Kraftfahrzeuges angebracht ist, **dadurch gekennzeichnet, dass** die äußere Abdeckung eine äußere Oberfläche aufweist, die Licht nur in einer Richtung hindurch lässt.

2. Dekorteil (12, 16) nach Anspruch 1, **dadurch gekennzeichnet, dass** die äußere Abdeckung (20) aus einem durchsichtigen Material besteht und eine äußere sichtbare Oberfläche (28) aufweist, die verchromt ist.

3. Dekorteil (12, 16) nach den Ansprüchen 1 oder 2, **dadurch gekennzeichnet, dass** die äußere Abdeckung (20) eine innere Oberfläche (30) aufweist, die der äußeren Oberfläche gegenüber liegt und eine das Licht streuende Oberflächenbeschaffenheit aufweist.

4. Verwendung eines Dekorteiles (12, 16) nach einem beliebigen der Ansprüche 1 bis 3 als Logo.

5. Verwendung eines Dekorteiles (12, 16) nach einem beliebigen der Ansprüche 1 bis 3 als Monogramm.

6. Kraftfahrzeug (10), das ein Dekorteil (12, 16) nach einem beliebigen der Ansprüche 1 bis 5 aufweist.
